# EUROPÄISCHE PATENTSCHRIFT

(11) **EP 1 826 073 B1**
(45) Veröffentlichungstag und Bekanntmachung des Hinweises auf die Patenterteilung: **08.07.2009**
(21) Anmeldenummer: 07101618.2
(22) Anmeldetag: 02.02.2007
(51) Int. Cl.: B60R 21/231, B60R 21/233

(54) **Knieairbag**
Knee airbag
Coussin gonflable pour genoux

(30) Priorität: 24.02.2006 DE 102006008756
(43) Veröffentlichungstag der Anmeldung: 29.08.2007
(73) Patentinhaber: Ford Global Technologies, LLC, Dearborn, MI 48126 (US)
(72) Erfinder: Heitplatz, Frank, 50735 Köln (DE); Varcus, Johannes A, 45549 Sprockhövel (DE)
(74) Vertreter: Dörfler, Thomas

(56) Entgegenhaltungen:
- EP-A- 1 531 098
- EP-A1- 1 300 300
- WO-A-03/049977
- US-A1- 2005 230 941

## Beschreibung

Die Erfindung betrifft einen Fahrer-Knieairbag, insbesondere für ein Kraftfahrzeug, mit einem Gasgenerator, mehreren Kammern und Fangbändern.

Die allgemein aus dem Stand der Technik bekannten Airbags sollen die Fahrzeuginsassen bei einem Aufprall vor Verletzungen schützen. Deshalb ist es wichtig, dass sich die Airbags schnell entfalten und einen optimalen Schutz bieten. Im Zuge der fortschreitenden Entwicklung von Sicherheitseinrichtungen im Kraftfahrzeug wird bei zunehmend mehr Fahrzeugen ein sogenannter Knieairbag eingesetzt, der neben der verbesserten Rückhaltefunktion des jeweiligen Insassen auch noch diese, insbesondere den Fahrer, vor dem Kontakt mit den unteren Strukturen, wie Lenksäule, schützt. Hierzu ist es notwendig, spezielle auf diese Bedürfnisse zugeschnittene Airbags zu entwickeln.

In der DE 199 00 592 A1 wird eine Kniestützvorrichtung beschrieben, bei der eine Verkleidung zwischen dem Airbag und dem Fahrzeuginsassen angeordnet ist. Beim Aufprall wird die Verkleidung zum Lenkrad verschoben. Der Fahrzeuginsasse wird bei dieser Konstruktion gegen die Verkleidung gedrückt. Diese Konstruktion ist jedoch relativ aufwändig und somit teuer.

Aus der eigenen unveröffentlichten Anmeldung DE 103 53 228 ist ein Knieairbag bekannt, der aufgrund der besonderen Anordnung der Fangbänder eine Aufblasreihenfolge besitzt, bei der zunächst eine mittlere Hochdruckkammer und anschließend seitliche Niederdruckkammern gefüllt werden. Es hat sich jedoch herausgestellt, dass trotz der guten Schutzwirkung solcher Airbags, noch Verbesserungsbedarf besteht.

Die Erfindung hat die Aufgabe einen Airbag der eingangs genannten Art dahingehend weiterzuentwickeln, dass er sich besser entfaltet und einem Fahrzeuginsassen, insbesondere dem Fahrer, einen besseren Schutz im Crashfall bietet.

Aus der gattungsbildenden WO 02049977 ist ein Fahrer-Knieairbag für ein Kraftfahrzeug bekannt, der ein U-förmiges Fangband aufweist. Die beiden U-Schenkel des Fangbandes weisen schräg nach oben und sind über die Basis des Fangbandes miteinander verbunden. Das Fangband teilt den Airbag in einer erste Druckkammer, die sich beidseitig zwischen den Seitenrändern und den U-Schenkel und unterhalb der Basis des Fangbandes und der Unterkante des Airbags erstreckt. Eine zweite Druckkammer wird im wesentlichen innerhalb des U-förmigen Fangbandes und der Oberkante des Airbags gebildet. Unterhalb der Basis ist in der ersten Druckkammer ein Gasgenerator angeordnet. Beim Auslösen des Gasgenerators strömt Gas in die erste Druckkammer, wodurch gleichzeitig eine Entfaltung des Airbags in horizontaler als auch vertikaler Richtung erfolgt.

Diese Aufgabe wird durch den in Anspruch 1 angegebenen Airbag gelöst.

Dadurch, dass er ein den Airbag im wesentlichen horizontal teilendes erstes Fangband und zwei sich vom ersten Fangband ausgehend im wesentlichen vertikal erstreckende Fangbänder umfasst, ist es möglich, die den Raum zwischen der Lenksäule und den Knien des Fahrers schnell durch den Airbag im Crashfall auszufüllen. Zudem kann somit die Form des aufgeblasenen Airbags besser an die Lenksäule und deren Umgebung angepasst werden, was einen höheren Schutz für den Fahrer ergibt. Ferner lässt sich die Aufblasreihenfolge des Airbags abweichend vom Stand der Technik derart ändern, dass er sich zunächst in seitlicher Richtung entfaltet und anschließend in Richtung des Lenkrads aufbläst, so dass die Knie des Fahrers bereits zu einem besonders frühen Zeitpunkt geschützt sind.

Es ist nämlich erkannt worden, dass eine besonders gute Rückhaltefunktion durch einen Knieairbag erreicht wird, wenn dieser den Raum zwischen der Lenksäule und den Insassenknie bereits vor der Bewegung des Insassen im Crashfall vollständig ausfüllt. Zudem besteht das Problem darin, dass der Raum zwischen der Lenksäule und den Insassenknie sich ständig ändert, z. B. je nach gewählter Position der Beine bzw. Knie bezüglich der Lenksäule. Dies ist mit den Airbags aus dem Stand der Technik, die lediglich horizontal verlaufende Fangbänder aufweisen, nicht möglich, da diese über die Breite gesehen, eine etwa gleich bleibende Dicke aufweisen.

Vorzugsweise ist das erste Fangband derart vorgesehen, dass eine sich im wesentlichen horizontal über die Breite des Airbags erstreckende erste Druckkammer gebildet wird, und die zwei sich vom ersten Fangband im wesentlichen vertikal erstreckende Fangbänder derart vorgesehen sind, dass zwei äußere Druckkammern und eine mittlere Druckkammer gebildet werden, und dass eine Gasaustrittsöffnung des Gasgenerators in der ersten Druckkammer angeordnet ist. Mit einer solchen bevorzugten Ausführungsform kann der Airbag besonders gut um die Lenksäule herum modelliert werden und gleichzeitig ein kleineres aufzublasendes Volumen eingestellt werden, so dass entsprechend kleine Gasgeneratoren verwendbar sind.

Günstigerweise ist das erste Fangband derart angeordnet, dass die erste Druckkammer unterhalb der weiteren Druckkammern angeordnet ist.

Sinnvoll ist es auch, wenn die sich vertikal erstreckenden Fangbänder derart angeordnet sind, dass die äußeren Druckkammern jeweils ein größeres Volumen als die mittlere Druckkammer aufweisen, da im mittleren Bereich des Airbags aufgrund der dort angeordneten Lenksäule ein kleineres Volumen ausreichend ist.

Um eine schnelle Entfaltung des Airbags auch in den äußeren Druckkammern zu erreichen, kann das erste Fangband Gasdurchtrittsöffnungen aufweisen, die vorzugsweise die erste Druckkammer jeweils mit den äußeren Druckkammern verbinden. Somit wird eine schnelle Ausbreitung des Gasdrucks erreicht.

Der Airbag umgreift also im Crashfall die Lenksäule, d. h. die äußeren Druckkammern sind jeweils seitlich von der Lenksäule angeordnet und die mittlere kleinere Druckkammer ist um die Lenksäule angeordnet. Somit wird das Volumen des Airbags dahin verteilt, wo es sinnvoll ist: ein kleines Volumen bzw. Dicke an/vor der Lenksäule und ein größeres Volumen bzw. Dicke zwischen Knien und Lenksäule/Armaturenbrett.

Um die gewünschte Aufblasreihenfolge zu erreichen, ist es sinnvoll, wenn die erste Druckkammer in der Aufblasreihenfolge vor den anderen Druckkammern angeordnet ist.

Weiterhin ist es günstig, wenn auch die äußeren Druckkammern in der Aufblasreihenfolge vor der mittleren Druckkammer angeordnet sind.

Sinnvollerweise ist der Airbag daher so ausgestaltet, dass er sich zuerst im Bereich der ersten Druckkammer im Wesentlichen quer zur Lenksäulenrichtung und anschließend im Bereich der weiteren Druckkammern in Lenksäulenrichtung aufbläst.

Weitere Merkmale, Einzelheiten und Vorteile der Erfindung ergeben sich aus der nachfolgenden Beschreibung eines Ausführungsbeispiels anhand der Zeichnung. Es zeigen:
- Fig. 1: eine schematische Draufsicht auf einen Airbag nach der Erfindung;
- Fig. 2: eine perspektivische Ansicht des Airbags aus Fig. 1;
- Fig. 3: eine schematische Ansicht des Airbags im Einbauzustand mit Blickrichtung auf ds Lenkrad während des Aufblasens und
- Fig. 4: einen Querschnitt durch den Airbag aus Fig. 3 entlang der Längsachse der Lenksäule.

In den Figuren ist ein als Ganzes mit 1 bezeichneter Fahrer-Knieairbag für ein Kraftfahrzeug, mit einem Gasgenerator 2, mehreren Kammern 5, 6, 7 und Fangbändern 3, 4 gezeigt.

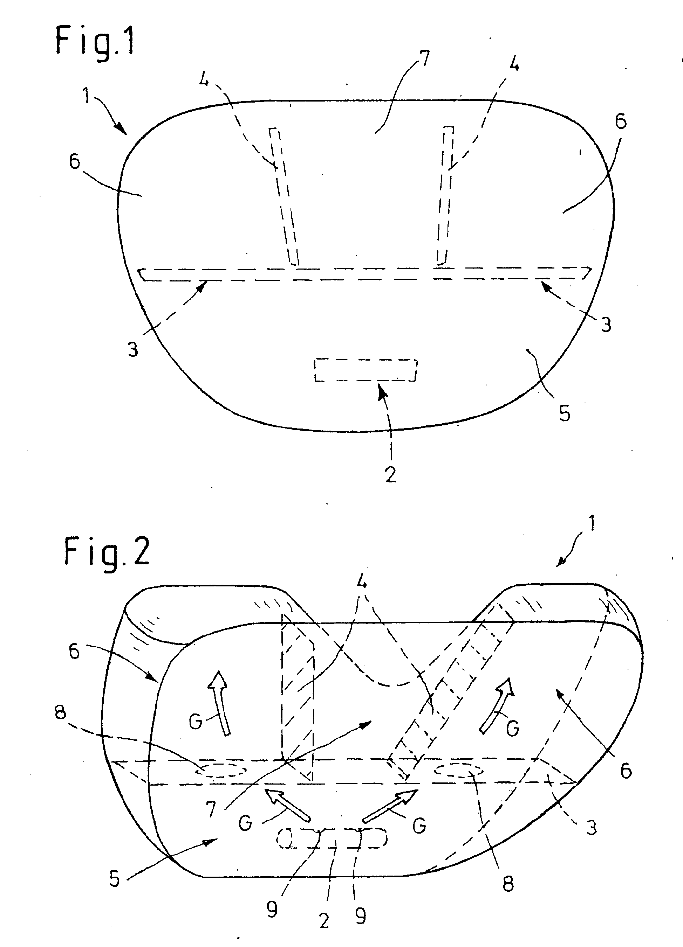

Der Airbag 1 umfasst ein diesen im wesentlichen horizontal teilendes erstes Fangband 3 und zwei sich vom ersten Fangband 3 ausgehend im wesentlichen vertikal erstreckende Fangbänder 4. Dabei bilden die Fangbänder 4 einen sich leicht nach oben erweiternden Winkel aus. Wie insbesondere aus Fig. 2 hervorgeht, kann jedes Fangband 4 ebenfalls einen sich von unten nach oben erweiternden Winkel ausbilden, also eine Keilform aufweisen.

Die Bezeichnung "oben" und "unten" beziehen sich hier jeweils auf die Ausrichtung des aufgeblasenen Airbags 1 bezüglich des Lenkrads bzw. des Fahrzeugs, in dem dieser eingesetzt wird.

Durch diese Fangbänderanordnung werden mehrere Druckkammern ausgebildet: Eine sich im Wesentlichen horizontal über die Breite und Tiefe des Airbags 1 erstreckende erste Druckkammer 5, zwei äußere Druckkammern 6 und eine mittlere Druckkammer 7. Dabei ist mindestens eine Gasaustrittsöffnung 9 des Gasgenerators 2 in der ersten Druckkammer 5 angeordnet.

Das erste Fangband 3 ist dabei so angeordnet, dass die erste Druckkammer 5 sich unterhalb der anderen Druckkammern 6, 7 befindet.

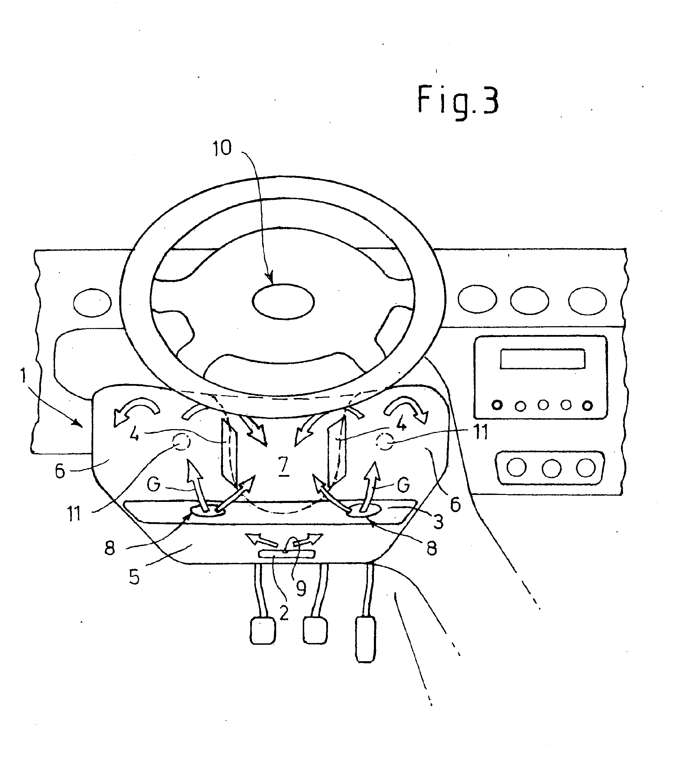

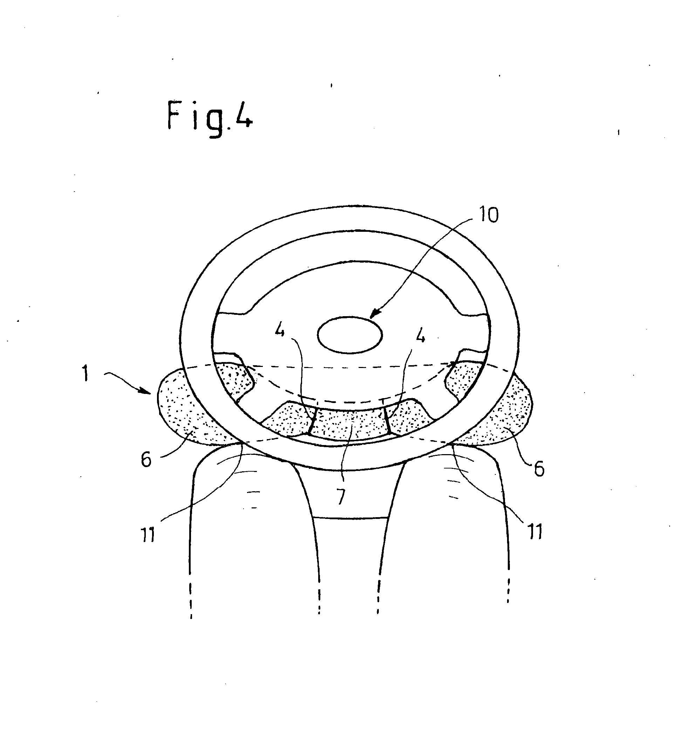

Die sich vertikal erstreckenden Fangbänder 4 sind so angeordnet, dass die äußeren Druckkammern 6 jeweils ein größeres Volumen als die mittlere Druckkammer 7 aufweisen, so dass der Airbag 1 sich im aufgeblasenen Zustand um die Lenksäule 10 (vgl. Fig. 3 und 4) schmiegt, wo ein kleineres Volumen ausreichend bzw. notwendig ist (vgl. Fig. 4), da der zur Verfügung stehende Raum zwischen Airbag 1 und Fahrer hier aufgrund der Raumbeanspruchung der Lenksäule 10 kleiner ist. Zudem wird so eine Positionierung des Airbags erreicht, so dass dieser nicht bei ungleichmäßiger Belastung verrutscht.

Um eine schnelle Entfaltung des Airbags 1 auch in den äußeren Druckkammern 6 zu erreichen, kann das erste Fangband 3 Gasdurchtrittsöffnungen 8 aufweisen, die die erste Druckkammer 5 jeweils mit den äußeren Druckkammern 6 verbinden. Somit wird eine schnelle Ausbreitung des Gasdrucks auch in die anderen Kammern erreicht.

Wie in Fig. 2 mittels der Pfeile G dargestellt ist, wird so die Ausbreitung des Gasdrucks von dem Gasgenerator 2 im Crashfall gezielt gelenkt.

Der Raum zwischen der Lenksäule 10 bzw. Armaturenbrett und den Knien des Fahrers wird daher schnell durch den Airbag 1 im Crashfall ausgefüllt (vgl. Fig. 3 und 4).

Die Aufblasreihenfolge des Airbags 1 erfolgt zunächst in seitlicher Richtung durch "Ausfalten" oder Aufblasen im Bereich der ersten Druckkammer 3, etwa quer zur Längsachse der Lenksäule 10, und anschließend in Richtung des Lenkrads durch Aufblasen und Entfalten der jeweiligen äußeren Druckkammern 6 und zum Schluss der mittleren Druckkammer 7, so dass die Knie des Fahrers bereits zu einem besonders frühen Zeitpunkt geschützt sind (vgl. Fig. 3).

Der Airbag 1 umgreift im Crashfall also die Lenksäule 10, wobei die äußeren Druckkammern 6 jeweils seitlich von der Lenksäule 10 angeordnet sind und die mittlere Druckkammer 7 um die Lenksäule 10 herum angeordnet ist.

Der Airbag 1 besitzt dabei vorzugsweise eine Gestalt, die von unten nach oben im Querschnitt zunimmt (vgl. Fig. 2),so dass die erste Druckkammer 5 ebenfalls einen kleineren Querschnitt aufweist, als die äußeren Druckkammern 6, die den eigentlichen Schutz des Fahrers bzw. seiner Knie übernehmen. Die typischen Aufprallbereiche der Knie sind in Fig. 3 mit 11 bezeichnet.

Es versteht sich, dass die Fangbänder auch durch jegliche andere geeignete Möglichkeit der Airbaggestaltung ersetzt werden können.

### Bezugszeichenliste

- 1: Airbag
- 2: Gasgenerator
- 3: horizontales Fangband
- 4: vertikales Fangband
- 5: erste Druckkammer
- 6: äußere Druckkammer
- 7: mittlere Druckkammer
- 8: Gasdurchtrittsöffnung
- 9: Gasaustrittsöffnung
- 10: Lenksäule
- 11: Knieaufprallbereich

- G: Gasfluss

## Patentansprüche

1. Fahrer-Knieairbag (1), insbesondere für ein Kraftfahrzeug, mit einem Gasgenerator (2), mehreren Kammern (5, 6, 7) und Fangbändem (3, 4), der ein den Airbag im wesentlichen horizontal teilendes erstes Fangband (3) und zwei sich vom ersten Fangband (3) ausgehend im wesentlichen vertikal erstreckende Fangbänder (4) umfasst,
**dadurch gekennzeichnet, dass**
das erste Fangband (3) derart vorgesehen ist, dass eine sich im wesentlichen horizontal über die Breite des Airbags (1) erstreckende erste Druckkammer (5) gebildet wird, und dass die zwei sich vom ersten Fangband (3) im wesentlichen vertikal erstreckende Fangbänder (4) derart vorgesehen sind, dass zwei äußere Druckkammern (6) und eine mittlere Druckkammer (7) gebildet werden, und dass eine Gasaustrittsöffnung (9) des Gasgenerators (2) in der ersten Druckkammer (5) angeordnet ist.

2. Fahrer-Knieairbag (1) nach Anspruch 1, **dadurch gekennzeichnet, dass** das erste Fangband (3) derart angeordnet ist, dass die erste Druckkammer (5) unterhalb der weiteren Druckkammern (6, 7) angeordnet ist.

3. Fahrer-Knieairbag (1) nach Anspruch 2 oder 3, **dadurch gekennzeichnet, dass** die sich vertikal erstreckenden Fangbänder (4) derart angeordnet sind, dass die äußeren Druckkammern (6) jeweils ein größeres Volumen als die mittlere Druckkammer (7) aufweisen.

4. Fahrer-Knieairbag (1) nach einem der vorhergehenden Ansprüche, **dadurch gekennzeichnet, dass** das erste Fangband (3) Gasdurchtrittsöffnungen (8) aufweist.

5. Fahrer-Knieairbag (1) nach Anspruch 4, **dadurch gekennzeichnet, dass** die Gasdurchtrittsöffnungen (8) die erste Druckkammer (5) jeweils mit den äußeren Druckkammern (6) verbinden.

6. Fahrer-Knieairbag (1) nach einem der vorhergehenden Ansprüche, **dadurch gekennzeichnet, dass** er unterhalb der Lenksäule (10) angeordnet ist.

7. Fahrer-Knieairbag (1) nach einem der vorhergehenden Ansprüche, **dadurch gekennzeichnet, dass** er im Crashfall die Lenksäule (10) umgreift, wobei die äußeren Druckkammern (6) jeweils seitlich von der Lenksäule (10) angeordnet sind und die mittlere Druckkammer (7) um die Lenksäule (10) angeordnet ist.

8. Fahrer-Knieairbag (1) nach einem der vorhergehenden Ansprüche, **dadurch gekennzeichnet, dass** die erste Druckkammer (5) in der Aufblasreihenfolge vor den anderen Druckkammern (6, 7) angeordnet ist.

9. Fahrer-Knieairbag (1) nach einem der vorhergehenden Ansprüche, **dadurch gekennzeichnet, dass** die äußeren Druckkammern (6) in der Aufblasreihenfolge vor der mittleren Druckkammer (7) angeordnet sind.

10. Fahrer-Knieairbag (1) nach einem der vorhergehenden Ansprüche, **dadurch gekennzeichnet, dass** er so ausgestaltet ist, dass er sich zuerst im Bereich der ersten Druckkammer (5) im wesentlichen quer zur Lenksäulenrichtung und anschließend im Bereich der weiteren Druckkammern (6, 7) in Lenksäulenrichtung aufbläst.

11. Verfahren zur Festlegung der Aufblasreihenfolge eines Fahrer-Knieairbags (1), insbesondere für ein Kraftfahrzeug, wobei der Knieairbag (1) mit einem Gasgenerator (2), mehreren Kammern (5, 6, 7) und Fangbändern (3, 4) versehen ist, wobei in dem Airbag (1) ein diesen im wesentlichen horizontal teilendes erstes Fangband (3) und zwei sich vom ersten Fangband (3) ausgehend im wesentlichen vertikal erstreckende Fangbänder (4) vorgesehen werden,
**dadurch gekennzeichnet, dass**
das erste Fangband (3) derart vorgesehen wird, dass eine sich im wesentlichen horizontal über die Breite des Airbags (1) erstreckende erste Druckkammer (5) gebildet wird, und dass die zwei sich vom ersten Fangband (3) im wesentlichen vertikal erstreckende Fangbänder (4) derart vorgesehen werden, dass zwei äußere Druckkammern (6) und eine mittlere Druckkammer (7) gebildet werden, und dass eine Gasaustrittsöffnung (9) des Gasgenerators (2) in der ersten Druckkammer (5) angeordnet wird.

12. Verfahren nach Anspruch 11, **dadurch gekennzeichnet, dass** ein Knieairbag (1) nach einem der Ansprüche 1 bis 10 eingesetzt wird.

## Claims

1. Driver's knee airbag (1), in particular for a motor vehicle, with a gas generator (2), a plurality of chambers (5, 6, 7) and catch straps (3, 4), which comprises a first catch strap (3) dividing the airbag essentially horizontally, and two catch straps (4) extending essentially vertically from the first catch strap (3), **characterized in that** the first catch strap (3) is provided in such a manner that a first pressure chamber (5) extending essentially horizontally over the width of the airbag (1) is formed, and **in that** the two catch straps (4) extending essentially vertically from the first catch strap (3) are provided in such a manner that two outer pressure chambers (6) and a central pressure chamber (7) are formed, and **in that** a gas outlet opening (9) of the gas generator (2) is arranged in the first pressure chamber (5).

2. Driver's knee airbag (1) according to Claim 1, **characterized in that** the first catch strap (3) is arranged in such a manner that the first pressure chamber (5) is arranged below the further pressure chambers (6, 7).

3. Driver's knee airbag (1) according to Claim 1 or 2, **characterized in that** the vertically extending catch straps (4) are arranged in such a manner that the outer pressure chambers (6) in each case have a larger volume than the central pressure chamber (7).

4. Driver's knee airbag (1) according to one of the preceding claims, **characterized in that** the first catch strap (3) has gas passage openings (8).

5. Driver's knee airbag (1) according to Claim 4, **characterized in that** the gas passage openings (8) connect the first pressure chamber (5) in each case to the outer pressure chambers (6).

6. Driver's knee airbag (1) according to one of the preceding claims, **characterized in that** it is arranged below the steering column (10).

7. Driver's knee airbag (1) according to one of the preceding claims, **characterized in that** it engages around the steering column (10) in the event of a crash, with the outer pressure chambers (6) being arranged in each case at the sides of the steering column (10) and the central pressure chamber (7) being arranged around the steering column (10).

8. Driver's knee airbag (1) according to one of the preceding claims, **characterized in that** the first pressure chamber (5) is arranged upstream of the other pressure chambers (6, 7) in the inflation sequence.

9. Driver's knee airbag (1) according to one of the preceding claims, **characterized in that** the outer pressure chambers (6) are arranged upstream of the central pressure chamber (7) in the inflation sequence.

10. Driver's knee airbag (1) according to one of the preceding claims, **characterized in that** it is configured in such a manner that it first of all, in the region of the first pressure chamber (5), inflates essentially transversely to the direction of the steering column and, subsequently, in the region of the further pressure chambers (6, 7), inflates in the direction of the steering column.

11. Method for defining the inflation sequence of a driver's knee airbag (1), in particular for a motor vehicle, the knee airbag (1) being provided with a gas generator (2), a plurality of chambers (5, 6, 7) and catch straps (3, 4), and, in the airbag (1), a first catch strap (3) dividing the latter essentially horizontally and two catch straps (4) extending essentially vertically from the first catch strap (3) being provided, **characterized in that** the first catch strap (3) is provided in such a manner that a first pressure chamber (5) extending essentially horizontally over the width of the airbag (1) is formed, and **in that** the two catch straps (4) extending essentially vertically from the first catch strap (3) are provided in such a manner that two outer pressure chambers (6) and a central pressure chamber (7) are formed, and **in that** a gas outlet opening (9) of the gas generator (2) is arranged in the first pressure chamber (5).

12. Method according to Claim 11, **characterized in that** a knee airbag (1) according to one of Claims 1 to 10 is used.

## Revendications

1. Coussin gonflable pour les genoux d'un conducteur (1), notamment pour un véhicule automobile, comprenant un générateur de gaz (2), plusieurs chambres (5, 6, 7) et des bandes de capture (3, 4), lequel comprend une première bande de capture (3) divisant le coussin d'air essentiellement horizontalement et deux bandes de capture (4) s'étendant essentiellement verticalement depuis la première bande de capture (3),
**caractérisé en ce que**
la première bande de capture (3) est prévue de telle sorte qu'une première chambre de pression (5) s'étendant essentiellement horizontalement sur la largeur du coussin d'air (1) soit formée, et **en ce que** les deux bandes de capture (4) s'étendant essentiellement verticalement depuis la première bande de capture (3) sont prévues de telle sorte que deux chambres de pression extérieures (6) et une chambre de pression centrale (7) soient formées, et **en ce qu'**une ouverture de sortie de gaz (9) du générateur de gaz (2) est disposée dans la première chambre de pression (5).

2. Coussin gonflable pour les genoux d'un conducteur (1) selon la revendication 1, **caractérisé en ce que** la première bande de capture (3) est disposée de telle sorte que la première chambre de pression (5) soit disposée en dessous des autres chambres de pression (6, 7).

3. Coussin gonflable pour les genoux d'un conducteur (1) selon la revendication 1 ou 2, **caractérisé en ce que** les bandes de capture (4) s'étendant verticalement sont disposées de telle sorte que les chambres de pression extérieures (6) présentent à chaque fois un plus grand volume que la chambre de pression centrale (7).

4. Coussin gonflable pour les genoux d'un conducteur (1) selon l'une quelconque des revendications précédentes, **caractérisé en ce que** la première bande de capture (3) présente des ouvertures de passage de gaz (8).

5. Coussin gonflable pour les genoux d'un conducteur (1) selon la revendication 4, **caractérisé en ce que** les ouvertures de passage de gaz (8) relient la première chambre de pression (5) à chaque fois aux chambres de pression extérieures (6).

6. Coussin gonflable pour les genoux d'un conducteur (1) selon l'une quelconque des revendications précédentes, **caractérisé en ce qu'**il est disposé sous la colonne de direction (10).

7. Coussin gonflable pour les genoux d'un conducteur (1) selon l'une quelconque des revendications précédentes, **caractérisé en ce qu'**en cas de collision, il vient en prise autour de la colonne de direction (10), les chambres de pression extérieures (6) étant à chaque fois disposées latéralement depuis la colonne de direction (10) et la chambre de pression centrale (7) étant disposée autour de la colonne de direction (10).

8. Coussin gonflable pour les genoux d'un conducteur (1) selon l'une quelconque des revendications précédentes, **caractérisé en ce que** la première chambre de pression (5) est disposée dans l'ordre de gonflage avant les autres chambres de pression (6, 7).

9. Coussin gonflable pour les genoux d'un conducteur (1) selon l'une quelconque des revendications précédentes, **caractérisé en ce que** les chambres de pression extérieures (6) sont disposées dans l'ordre de gonflage avant la chambre de pression centrale (7).

10. Coussin gonflable pour les genoux d'un conducteur (1) selon l'une quelconque des revendications précédentes, **caractérisé en ce qu'**il est configuré de telle sorte qu'il se gonfle d'abord dans la région de la première chambre de pression (5) essentiellement transversalement à la direction de la colonne de direction et ensuite dans la région des autres chambres de pression (6, 7) dans la direction de la colonne de direction.

11. Procédé pour établir l'ordre de gonflage d'un coussin gonflable pour les genoux d'un conducteur (1), notamment pour un véhicule automobile, dans lequel le coussin gonflable pour les genoux (1) est pourvu d'un générateur de gaz (2), de plusieurs chambres (5, 6, 7) et de bandes de capture (3, 4), une première bande de capture (3) divisant essentiellement horizontalement le coussin gonflable (1) et deux bandes de capture (4) s'étendant essentiellement verticalement depuis la première bande de capture (3) étant prévues dans le coussin gonflable (1),
**caractérisé en ce que**
la première bande de capture (3) est prévue de telle sorte qu'une première chambre de pression (5) s'étendant essentiellement horizontalement sur la largeur du coussin gonflable (1) soit formée, et **en ce que** les deux bandes de capture (4) s'étendant essentiellement verticalement depuis la première bande de capture (3) sont prévues de telle sorte que deux chambres de pression extérieures (6) et une chambre de pression centrale (7) soient formées, et **en ce qu'**une ouverture de sortie de gaz (9) du générateur de gaz (2) est disposée dans la première chambre de pression (5).

12. Procédé selon la revendication 11, **caractérisé en ce qu'**un coussin gonflable pour les genoux (1) selon l'une quelconque des revendications 1 à 10 est utilisé.
